# FASCICULE DE BREVET EUROPEEN

(11) **EP 3 029 766 B1**
(45) Date de publication et mention de la délivrance du brevet: **16.07.2025**
(21) Numéro de dépôt: 15194819.7
(22) Date de dépôt: 16.11.2015
(51) Int. Cl.: H01Q 1/22, G06Q 20/32, H01Q 1/24, H01Q 1/14, G07F 7/08

(54) **ANTENNE SANS CONTACT, STRUCTURE DE SUPPORT ET CONNECTEUR CORRESPONDANT**
KONTAKTLOSE ANTENNE, HALTERUNGSSTRUKTUR UND ENTSPRECHENDER ANSCHLUSS
CONTACTLESS ANTENNA, MOUNTING STRUCTURE AND CORRESPONDING CONNECTOR

(30) Priorité: 03.12.2014 FR 1461834
(43) Date de publication de la demande: 08.06.2016
(73) Titulaire: Banks and Acquirers International Holding, 75015 Paris (FR)
(72) Inventeur: BONNET, Eric, 26120 Malissard (FR)
(74) Mandataire: LLR

(56) Documents cités:
- EP-A1- 1 895 618
- FR-A1- 2 872 323
- JP-A- 2013 165 368
- KR-A- 20040 000 268
- US-A1- 2010 044 444

## Description

### 1. Domaine de l'invention

L'invention se rapporte au domaine des terminaux de paiement. Plus particulièrement l'invention se rapporte domaine des terminaux de paiement qui disposent de fonctions de paiement sans contact, également appelé contactless ou CLESS.

### 2. Art antérieur.

Avec le développement récent des moyens de paiement sans contact, telles que les cartes de crédit ou de paiement sans contact, mais également les smartphones, les terminaux de paiement nouvellement produits embarquent fréquemment des systèmes de traitement des transactions sans contact. De tels systèmes de traitement des transactions sans contact comprennent généralement une antenne, appelée antenne sans contact et un processeur chargé de la communication sans contact (il peut s'agir d'un processeur dédié ou d'un processeur générique, selon les cas).

Le traitement des paiements sans contact est l'une des dernières fonctions ajoutées aux terminaux de paiement (parmi les nombreuses fonctions supplémentaires qui ont été successivement ajoutées aux terminaux au cours des dernières années). Parmi ces fonctions complémentaires on peut notamment citer des fonctions de communication sans fil (Wifi, Bluetooth), des fonctions de communication par l'intermédiaire de réseaux de téléphonie mobile (GPRS, UMTS), des fonctions de saisies améliorées (par l'utilisation d'écrans tactiles par exemple). Ces fonctions ont été ajoutées au fur et à mesure de l'évolution d'une part des technologies et d'autre part des demandes des clients.

Ces nombreuses fonctions entre en concurrence les unes avec les autres. Pour ne citer que les techniques de communication sans fil, bien que les bandes de fréquences utilisées soient souvent différentes, des perturbations surviennent de manière fréquente entre les différents systèmes de communication lorsqu'ils sont activés de manière concomitante.

Par exemple, il n'est pas rare que le système de paiement sans contact soit perturbé soit par une activation intempestive d'un système de communication sans fil ou encore par l'utilisation d'un écran tactile ou d'un clavier.

Cette problématique prend sa source dans le fait que le terminal de paiement est léger et compact. De ce fait, les différentes fonctions de communication qui sont embarquées dans le terminal sont situées à des distances très proches les unes des autres. Les concepteurs de terminaux tentent de trouver des solutions permettant de palier les problématiques rencontrées.

Ainsi, dans le cas du système de communication sans contact, il est nécessaire de disposer d'une antenne qui puisse transmettre un signal aux moyens de communications de paiement sans contact et capter les données qui sont émises à partir de ces moyens de paiement sans contact. Jusqu'à présent, cette antenne est majoritairement placée autour de l'écran car de manière naturelle, lorsque l'utilisateur souhaite effectuer un paiement à l'aide de sa carte sans contact ou de son smartphone, il approche celui-ci de l'écran. Ainsi, les concepteurs de terminaux de paiement ont jugé que l'antenne nécessaire au paiement sans contact (antenne contactless), devait être placée en face ou à proximité de l'endroit où l'utilisateur présente son moyen de paiement. De plus, il faut comprendre que le montage d'un terminal de paiement est une opération complexe, réalisé pour une bonne partie à la main, et que les concepteurs de terminaux doivent prendre en compte cet aspect des choses lorsqu'ils conçoivent un nouveau terminal. L'adjonction d'une antenne sans contact, qui doit nécessairement être proche de la surface externe du terminal (pour que le rayonnement de l'antenne soit efficace), a donc été réalisée de la manière la plus simple possible tant en termes de montage qu'en termes de positionnement.

Pour ce faire, l'antenne sans contact est réalisée sous la forme d'un circuit imprimé flexible qui fait le tour de l'écran. Cette méthode de conception de l'antenne sans contact est avantageuse d'un certain point de vue. En effet, le montage de cette antenne est extrêmement simple. Il suffit de poser l'antenne autour de l'écran et de brancher le flexible dans un connecteur préalablement soudé sur la carte mère du terminal (connecteur FPC).

Cette méthode de conception de l'antenne sans contact pose cependant un problème économique. En effet, les circuits imprimés flexibles sont facturés lors de leur fabrication en fonction de la surface totale occupée par le circuit imprimé flexible. Autrement dit, comme l'antenne sans contact effectue le tour de l'écran, une partie substantielle de la surface de ce circuit imprimé flexible est facturée (le centre, qui est vide) alors même qu'elle n'est pas utilisée. On peut aisément comprendre que lorsqu'un écran fait par exemple 12 cm² le fait de devoir payer un flexible pour 12 cm² alors que seulement une infime partie de cette surface est réellement utilisée dans la fabrication du terminal pose un problème sensible au niveau des coûts du terminal.

Par ailleurs ce positionnement du circuit imprimé flexible autour de l'écran pose également un problème en termes d'interférence. En effet dans le domaine du terminal de paiement, les écrans tactiles qui sont utilisés ont la particularité d'incorporer une enveloppe métallique dont l'objectif est de permettre à l'écran de résister aux décharges électrostatiques. Or cette enveloppe métallique produit des interférences importantes au niveau de l'antenne lorsque celle-ci est utilisée.

L'emplacement existant de l'antenne sans contact n'est donc pas satisfaisant. Il existe donc un besoin de fournir une solution qui d'une part permette de disposer d'une antenne sans contact dont le coût est plus faible que le coût d'une antenne sans contact classique à base de circuits imprimés flexibles et dont l'efficacité en termes d'émission et de réception de signal soit plus grande afin d'offrir à l'utilisateur une expérience d'achat qui soit plus satisfaisante. Le brevet EP 1 895 618 A1 divulgue une pièce de structure d'une architecture interne d'un terminal de paiement qui comprend un câble formant antenne. 15 **3. Résumé**

La présente divulgation, d'en au moins certains modes de réalisation, ne présente pas ses inconvénients de l'art antérieur. En effet la présente divulgation se rapporte à une antenne sans contact qui d'une part, et peu chère dans sa réalisation et qui d'autre part, permet d'éviter les problèmes d'interférences connues des terminaux de l'art antérieur.

Ainsi, selon un premier aspect, on divulgue une pièce de structure d'une architecture interne d'un terminal de paiement, ladite pièce de structure étant constituée d'un matériau rigide. Selon la divulgation, ladite pièce de structure interne comprend, sur son pourtour, des moyens de préhension et de guidage d'un câble électrique formant antenne.

Ainsi, il est possible de monter et de guider un câble électrique autour de la pièce de structure en utilisant la surface externe de celle-ci.

Selon une caractéristique particulière, lesdits moyens de préhension et de guidage se présentent sous la forme d'un canal.

Ainsi, le câble électrique prend une place prédéterminée au sein du canal.

Selon une caractéristique particulière, la largeur dudit canal est variable.

Ainsi, le bobinage du câble ne peut être effectué que d'une seule manière.

Selon une caractéristique particulière, ladite pièce de structure comprend en outre un orifice d'insertion dudit câble électrique.

Ainsi, le câble est maintenu en place avant son bobinage.

Selon une caractéristique particulière, ladite pièce de structure comprend en outre une goulotte de sortie du câble de guidage.

Selon une caractéristique particulière, ladite pièce de structure est destinée à être disposée au-delà d'une zone de réception d'un écran dudit terminal de paiement.

Ainsi, le câble formant antenne est moins sujet aux perturbations électromagnétiques.

Selon un autre aspect, la divulgation se rapporte également à un terminal de paiement. Un tel terminal comprend :
- une pièce de structure telle que décrite précédemment
- un câble monobrin formant trois spires sur le pourtour de ladite pièce de structure ;
- deux connecteurs métalliques embossés, soudés sur une carte mère dudit terminal de paiement, au sein desquels les deux extrémités dudit câble monobrin sont insérées.

La présente divulgation se rapporte également à deux connecteurs métalliques embossés, soudés sur une carte mère dudit terminal de paiement, au sein desquels les deux extrémités dudit câble monobrin sont insérées.

### 4. Dessin

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :
- la figure 1 illustre un terminal de paiement ;
- la figure 2 est un schéma d'une pièce de structure interne d'un terminal de paiement selon la technique proposée ;
- les figures 3a, 3b et 3c illustrent un mode de réalisation d'une pièce de structure interne d'un terminal de paiement selon la technique proposée ;
- la figure 4 illustre un mode de réalisation d'une pièce de structure interne d'un terminal de paiement selon la technique proposée avec un câble électrique monobrin formant antenne ;
- les figures 5a et 5b illustrent un mode de réalisation d'un connecteur destiné à recevoir les extrémités du câble formant antenne ;
- la figure 6 est schéma d'un développé d'un connecteur;
- la figure 7 illustre la connexion du câble formant antenne aux connecteurs décrits précédemment.

### 5. Mode de réalisation.

### 5.1. Résumé

La multitude des fonctions incorporées dans un terminal de paiement moderne oblige les concepteurs de terminaux à trouver des solutions pour faire en sorte que ses fonctions puissent être mise en œuvre de la manière la plus satisfaisante qui soit. Parmi ces fonctions, la fonction de paiement sans contact pose des problèmes tant au niveau opérationnel qu'au niveau économique.

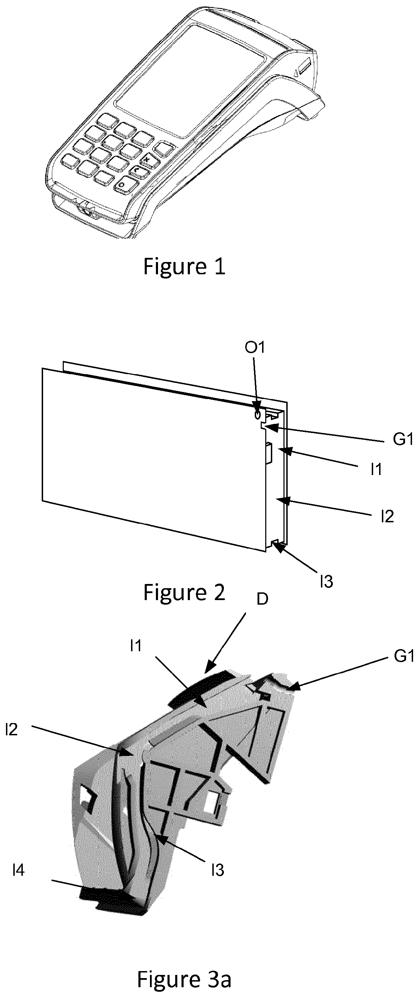

La problématique à la base de la technique proposée sera mieux comprise à la lecture de la figure 1. Un terminal de paiement moderne comprend une demi-coque supérieure et une demi-coque inférieure. Au niveau de la face supérieure, un certain nombre d'éléments prennent place au niveau des ouvertures de la demi-coque supérieure : le terminal comprend ainsi un écran, un clavier (utilisée pour effectuer les opérations nécessaires à la validation de paiement), un lecteur de cartes à mémoire (par exemple un lecteur de cartes à puces), un deuxième lecteur de cartes à mémoire (par exemple un lecteur de carte magnétique) souvent positionné latéralement, une imprimante (utilisée pour imprimer par exemple des reçus d'achat). En général, le lecteur de cartes à puces (premier lecteur de carte à mémoire) est positionné sous le clavier en face avant du terminal de paiement. L'imprimante quant à elle est positionnée après l'afficheur, en face arrière du terminal. La face antérieure du terminal comprend souvent une trappe d'accès à un logement permettant l'insertion d'une troisième carte à mémoire. Cette troisième carte à mémoire peut par exemple être une carte destinée à un professionnel. Pour effectuer le montage de ce terminal, il est nécessaire d'une part de monter un certain nombre de composants sur des cartes électroniques. Puis, lorsque tous les composants ont été montés, on assemble les différentes pièces plastiques qui constituent le terminal. L'assemblage de la demi-coque inférieure et de la demi-coque supérieure constitue la phase finale de l'assemblage du terminal. Cette demi-coque inférieure et cette demi-coque supérieure sont en règle générale vissées sur une structure interne de terminal. Cette structure interne, généralement en plastique, peut être assimilé au squelette du terminal de paiement. Cette structure interne est composée elle-même de plusieurs pièces en plastique qui sont assemblées les unes avec les autres.

La solution proposée consiste dans un premier aspect a proposé une antenne sans contact qui soit moins chère de par l'utilisation d'un matériau non onéreux et plus particulièrement par l'utilisation d'un câble électrique. La technique proposée consiste dans un deuxième aspect a proposé une modification de l'emplacement de l'antenne sans contact. La solution générale de la technique proposée consiste dans un troisième aspect à faciliter le branchement de cette antenne sans contact sur une carte mère du terminal de paiement.

Dans le domaine de la conception de dispositif électronique, le matériau qui est l'un des moins chers est le câble électrique. Un tel câble électrique ne présente aucune difficulté de fabrication particulière et est donc économiquement avantageux. Ainsi dans une optique de réduction du prix du terminal, les inventeurs ont eu l'idée d'utiliser un câble électrique pour réaliser cette antenne.

La simple utilisation de ce câble électrique ne constitue bien évidemment pas la caractéristique principale de ce premier aspect de la divulgation. En revanche, le fait que ce câble électrique soit enroulé par trois fois autour d'un support prévu à cet effet sur une pièce du terminal de paiement permet de résoudre le problème du prix de l'antenne sans contact et constitue ainsi une solution économiquement avantageuse au problème précédemment mentionné.

Ceci permet d'aborder le deuxième aspect de la technique proposée, qui constitue l'aspect central de celle-ci. Comme explicité précédemment, le montage d'un terminal de paiement est une opération qui comprend de nombreuses phases au cours desquelles une intervention humaine est requise. Lorsque, dans les terminaux de l'art antérieur, un circuit imprimé flexible est utilisé pour former une antenne sans contact, la solution la plus simple et la plus efficace en termes de montage du terminal consiste à munir le circuit imprimé flexible d'une extrémité qui prend place dans un connecteur (connecteur FPC). Cette solution permet de monter simplement l'antenne sans contact.

Dans la technique proposée, dans la mesure où l'on ne souhaite plus utiliser de circuit imprimé flexible, il est nécessaire de trouver une solution complémentaire pour monter l'antenne. L'avantage du câble et qu'il peut être manipulé aisément. Dès lors les inventeurs ont eu l'idée de concevoir une pièce de structure particulière pour le montage de cette antenne. Comme le volume disponible dans un terminal de paiement est relativement limité, les inventeurs ont eu l'idée d'utiliser une pièce de structure particulière pour l'antenne sans contact. Le principe en est décrit en relation avec la figure 2.

Il s'agit d'une pièce de structure de l'architecture interne du terminal de paiement qui est constituée d'un matériau rigide. Cette pièce de structure interne comprend, sur son pourtour, des moyens de préhension et de guidage du câble électrique qui forme antenne. Cette pièce peut être de forme générale quelconque. Cependant, de par les spécifications de la norme sans contact, cette pièce est suffisamment grande pour que la surface générale occupée par l'antenne respecte ces normes. Par ailleurs, le pourtour de la pièce (et par conséquent le pourtour de l'antenne) est, lorsque le terminal est monté, suffisamment proche de la surface externe du terminal pour que les signaux émis et reçus par l'antenne soient de bonne qualité.

Par ailleurs, cette pièce de structure interne comprend un orifice d'insertion du câble électrique. Cet orifice d'insertion permet de maintenir le câble lors de le bobinage de celui-ci dans les moyens de préhension et de guidage. Plus particulièrement, le câble est d'abord inséré dans l'orifice. Une fois inséré, le câble est ensuite enroulé autour de la pièce de structure (d'un nombre de tours nécessaire en fonctions des paramètres de l'antenne sans contact). Le fait que le câble ait d'abord été inséré avant d'être enroulé autour de la pièce, permet d'assurer le maintien préalable du câble. Bien évidemment, le diamètre de l'orifice du câble est adapté au diamètre du câble, et plus particulièrement, il est sensiblement identique à celui du diamètre du câble.

Par ailleurs, cette pièce de structure interne comprend une goulotte de sortie du câble de guidage. Cette goulotte est utilisée pour maintenir le câble une fois l'opération de bobinage terminée et que l'antenne est formée. Ainsi, le câble n'a plus besoin d'être maintenu et la pièce de structure peut être utilisée pour poursuivre le montage du terminal de paiement. Dans un mode de réalisation particulier, l'axe central de l'extrémité de cette goulotte est parallèle à l'axe central de l'orifice d'insertion. Dès lors, lorsque le bobinage de l'antenne est achevé, les deux extrémités de l'antenne débouchent de manière parallèle de la pièce. Les deux extrémités de l'antenne peuvent alors être connectées à la carte mère du terminal de paiement, selon un troisième aspect de la technique décrite, qui sera développé par la suite. Dans un mode de réalisation particulier, cette goulotte et l'orifice d'insertion sont sensiblement proches l'un de l'autre, afin que les deux extrémités du câble d'antenne soient proches l'une de l'autre et puissent être fixés à des emplacements sensiblement proches sur la carte mère.

Par ailleurs, les moyens de préhension et de guidage du câble électrique formant antenne disposent en outre de moyens de mise sous tension du câble électrique. En fonction des modes de réalisation, ces moyens de mise sous tensions se présentent par exemple sous la forme de courbure dans le chemin du câble ou encore de clips de rétention.

Le troisième aspect de la technique proposée se rapporte à un nouveau connecteur pour les extrémités du câble formant antenne. On a décrit que les deux extrémités du câble sont soudées à la carte mère. Préalablement, l'utilisation d'un circuit imprimé flexible nécessitait l'utilisation d'un connecteur FPC. Dans ce troisième aspect, on cherche à faciliter l'opération de fixation des deux extrémités de câble. Pour ce faire, on propose un connecteur réalisé en tôle métallique qui a la particularité de pouvoir être soudé directement sur la carte mère du terminal de paiement de la même manière qu'un composant électronique. Ceci est intéressant car on dispose d'un connecteur aussi facile d'utilisation qu'un connecteur FPC, mais pour un unique fil.

Dans le mode de réalisation décrit par la suite, la pièce de structure est une pièce proche du rouleau d'impression du terminal de paiement. Ceci permet d'éloigner l'antenne le plus possible des zones susceptibles de produire des interférences. Pour ce mode de réalisation, les inventeurs ont ainsi eu l'idée d'utiliser un support d'antenne qui fait partie des pièces nécessaires au montage du terminal au niveau de l'imprimante.

Bien évidemment, les modes de réalisation présentés ne représentent que des possibilités de mise en œuvre de la présente technique et ne doivent pas être considérés comme limitatifs du point de vue de la portée de la technique proposée.

### 5.2. Description d'un mode de réalisation de la pièce de structure

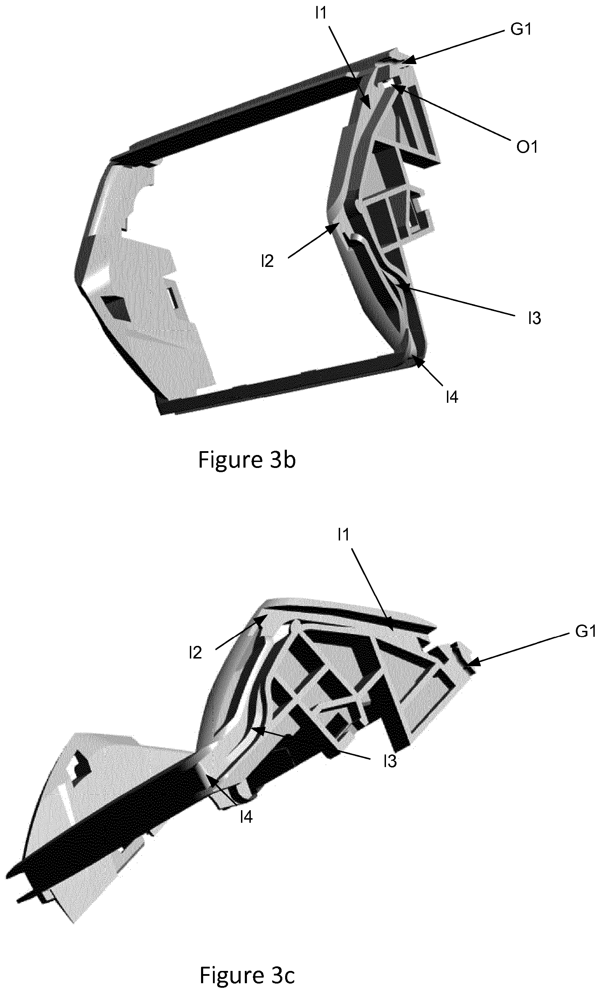

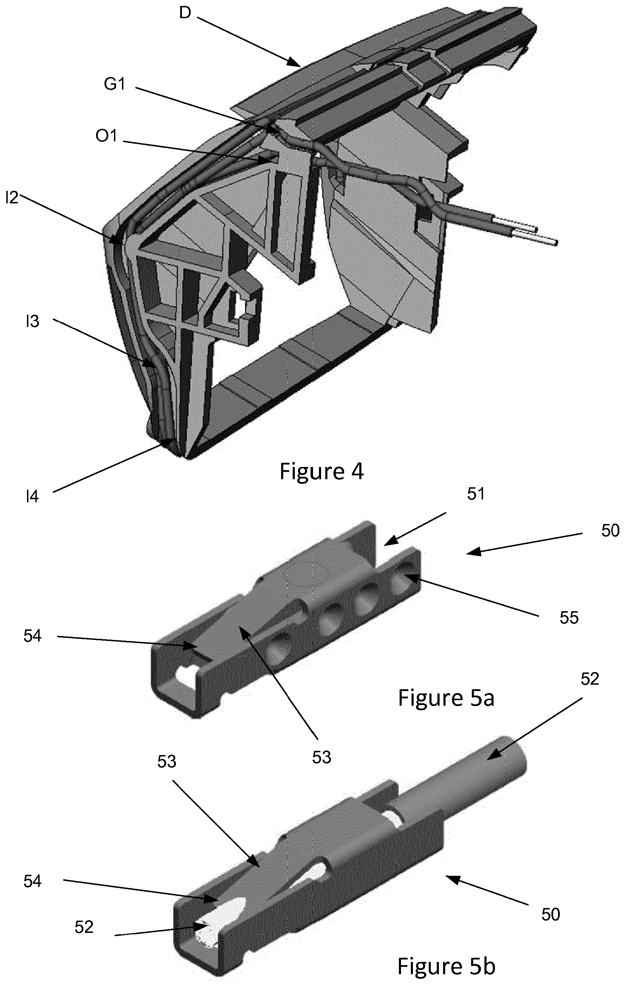

Ce mode de réalisation de la pièce de structure telle que décrite précédemment est présenté en relation avec les figures 3a, 3b, 3c, 4. Les références numériques des figures précédentes ont été conservées. Dans ce mode de réalisation, les inventeurs ont choisi d'intégrer l'antenne contactless au-delà de la zone de l'afficheur du terminal de paiement, afin de s'affranchir de contraintes dues à la présence des parties métalliques éventuelles de l'afficheur, de la carte mère et des autres antennes notamment GPRS. De ce fait l'antenne se situe autour du rouleau de papier de l'imprimante (pièce qui est non conductrice, inerte d'un point de vue électrique et non perturbable électriquement).

Ainsi, la pièce de structure, dans ce mode de réalisation, est une pièce servant de support, au moins partiel, à un rouleau de papier. Les moyens de préhension et de guidage du câble électrique se matérialisent sous la forme d'un canal dont la largeur n'est pas constante (l#1, l#2, l#3, l#4), comme cela peut être observé sur les figures. Ce canal est néanmoins conformé pour recevoir trois spires d'antenne (trois tours du câble électrique servant d'antenne). Cette absence de constance dans la largeur du canal permet de contraindre la manière dont le câble électrique est enroulé sur la pièce de structure (ceci pour éviter une variabilité dans la pose du câble). Ainsi, aux emplacements où le canal est le plus large, les différentes spires du câble sont placées parallèlement. En revanche, aux emplacements où le canal est le plus étroit, la troisième spire est superposée sur les deux autres spires. Ainsi, grâce à cette absence de constance dans la largeur du canal, on est assuré que le câble est toujours enroulé de la même manière. Cela permet de répondre au besoin de constance de l'antenne. En en effet, il est important que l'antenne soit réalisée selon un schéma constant car le fonctionnement de l'antenne est prédéterminé lors du choix des composants électroniques et/ou de la programmation du processeur qui sont montés dans le terminal de paiement, le but étant d'accorder l'antenne sur une fréquence de communication. S'il advenait que l'antenne soit réalisée d'une manière différente à chaque fabrication de terminal, les composants électroniques devraient être ajustés ou modifiés en fonction de chaque antenne. Un tel ajustement des terminaux, en fonction de l'antenne qui a réellement été montée, est bien entendu inenvisageable lorsque des terminaux sont fabriqués en quantité industrielle. Dès lors, il est essentiel que l'antenne soit toujours montée dans le même sens et de la même manière. La configuration du canal de bobinage (d'enroulement) dans ce mode de réalisation permet d'assurer que cette antenne est effectivement montée toujours de la même manière ou à tout le moins que la variabilité de montage de l'antenne est faible. En d'autres termes, cette pièce de structure permet de guider la mise en place du fils d'antenne par une série de rainures et de crochets positionnant les boucles de fils d'antenne pour donner une répétabilité dans la forme de l'antenne et de la longueur du fils de celle-ci.

Dans la configuration décrite sur les figures, le câble occupe naturellement une position stable à la première boucle, cette première boucle servant ensuite de support aux boucles suivantes. En d'autres termes, la pièce servant de support permet de guider la mise en place du fil d'antenne par une série de rainures et crochets positionnant les boucles de fil, et de donner une répétabilité dans la forme de l'antenne et la longueur de fil de celle-ci.

Dans ce mode de régulation par ailleurs, la pièce servant de support au câble d'antenne permet d'assurer que l'antenne sera proche de la surface externe du terminal afin de favoriser la portée d'émission et de réception de cette antenne (qui selon la norme, doit être de 0 à 4 cm).

La pièce de structure est inscrite dans un parallélépipède rectangle. Cette pièce de structure est composée d'un mélange de polyamide et de fibre de verre. Il s'agit d'une pièce réalisée une technique d'injection plastique. Le mélange polyamide et fibre de verre permet d'obtenir une pièce d'une grande rigidité. Ceci est important à deux titres dans ce mode de réalisation : la rigidité de cette pièce participe à la rigidité générale du terminal de paiement ; de plus dans ce mode de réalisation cette pièce dispose dans sa partie supérieure d'une lame de coupe de papier (D), cette lame de coupe de papier étant utilisée pour effectuer le découpage des reçus qui sont imprimés par l'imprimante à l'intérieur du terminal. Le papier est éjecté du terminal par l'intermédiaire d'une fente qui se situe à une position sensiblement identique à celle de la lame de découpe. À la fin de l'impression du reçu, l'utilisateur du terminal peut utiliser cette lame pour effectuer la découpe du papier. Or, cette opération répétée de tranchage nécessite l'utilisation d'une matière relativement rigide, c'est donc pour cette raison qu'il est nécessaire de disposer d'une pièce rigide et résistante à l'abrasion. Bien évidemment il eût été possible d'ajouter, en remplacement de cette lame de découpe intégrée, une lame métallique de découpe. Cependant une telle solution aurait nécessité le montage d'une pièce supplémentaire.

Par ailleurs, dans ce mode de réalisation, le câble utilisé a également une importance non négligeable. Plus particulièrement, dans ce mode de réalisation, le câble utilisé est un câble monobrin, de diamètre égal à 0,8 mm. L'épaisseur de l'isolant quant à elle est de 0,2 mm.

On peut noter, également, que la rigidité de la pièce contribue à la répétabilité de la géométrie de la pièce malgré les efforts dus au bobinage du fil. La figure 4 expose une pièce telle que décrite préalablement dans laquelle un câble électrique est enroulé pour former une antenne sans contact.

### 5.3. Description d'un mode de réalisation d'un connecteur d'antenne

Comme indiqué précédemment, le connecteur d'antenne doit faire l'objet d'une adaptation pour se conformer à la configuration particulière de l'antenne proposée. Plus particulièrement, la connexion du câble d'antenne sur la carte mère se fait par des contacts spécifiquement développés. Ces contacts permettent d'assurer un contact électrique ce qui est la première fonction de ce contact, d'assurer une tenue mécanique du câble (c'est-à-dire de s'assurer que le câble ne puisse pas être ôté du connecteur de manière simple une fois que le câble est inséré), d'être soudé à la carte mère par l'intermédiaire d'un procédé de soudure classique.

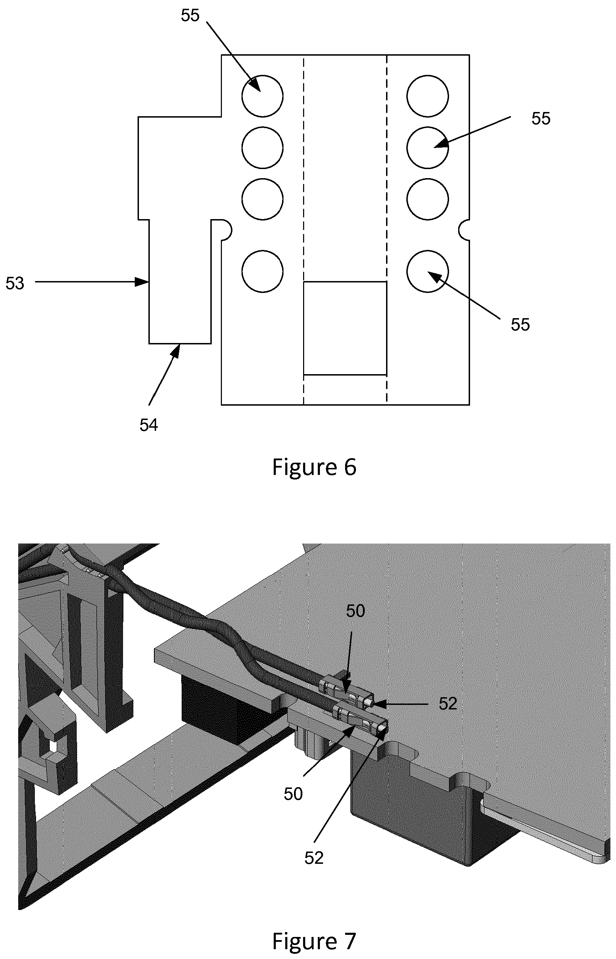

Pour ce faire dans ce mode de réalisation, on propose un connecteur réalisé par pliage d'une tôle métallique. Un exemple de réalisation de ce connecteur est décrit en relation avec les figures 5a, 5b et 6. Les figures 5a et 5b représentent une vue isométrique du connecteur de la présente technique. La figure 6 représente le développé de ce connecteur à partir d'une tôle métallique plane. Le connecteur comprend une portion d'insertion (51) d'un câble électrique (52). Il comprend également une patte de rétention (53) du câble électrique. Cette patte de rétention (53) du câble électrique est inclinée par rapport au plan général du connecteur. Cette patte de rétention (53) est inclinée vers l'intérieur du connecteur de manière à appuyer sur le câble électrique (52) lorsque celui-ci est inséré dans le connecteur. L'angle de cette patte d'insertion et d'environ 15° par rapport au plan général du connecteur. La patte d'insertion comprend à son extrémité une arête de rétention (54). Cette arête de rétention (54) est destinée à retenir le câble électrique mono brin qui est inséré. De plus, dans au moins un mode de réalisation, le connecteur comprend au moins un embossage latéral (55). Cet embossage latéral a pour objectif de faciliter le contact entre le câble électrique et le connecteur. Ainsi dans ce connecteur, la patte de rétention (54) a pour fonction de maintenir le câble tandis que les embossages (55) ont pour fonction d'établir un contact électrique entre le câble et le contacteur. Par ailleurs, le fourreau qui est créé par pliage de la tôle métallique, est étamé pour pouvoir être soudé en refusion sur la carte électronique. Cette solution présente les avantages suivants :
- encombrement faible du connecteur;
- possibilité de créer une tenue assez ferme (indémontable) ;
- faible prix de revient.

Le connecteur de l'invention est directement soudé sur la carte mère du terminal de paiement à des emplacements définis comme cela est indiqué sur la figure 7. Dès lors une fois que le montage de l'antenne est effectué sur la pièce de structure, l'opérateur a juste à enficher les câbles de cette antenne dans les deux connecteurs. Grâce à la pâte d'insertion qui comprend à son extrémité arête de rétention, la tenue du câble dans le contacteur est assurée lors des opérations de montage.

Au final, le prix de revient de la solution générale de la présente technique est bien moindre que le prix de revient des solutions antérieures tout en ce assurant une fiabilité accrue de l'antenne sans contact par rapport aux solutions antérieures.

## Revendications

1. Pièce de structure d'une architecture interne d'un terminal de paiement, ladite pièce de structure étant constituée d'un matériau rigide **caractérisé en ce que** ladite pièce de structure interne comprend, sur son pourtour, des moyens de préhension et de guidage (I1, I2, I3, I4) d'un câble électrique formant antenne, **caractérisé en ce que** lesdits moyens de préhension et de guidage se présentent sous la forme d'un canal, la largeur dudit canal étant variable.

2. Pièce de structure selon la revendication 1, **caractérisé en ce qu'**elle comprend en outre un orifice d'insertion (O1) dudit câble électrique.

3. Pièce de structure selon la revendication 1, **caractérisé en ce qu'**elle comprend en outre une goulotte de sortie (G1) du câble électrique.

4. Pièce de structure selon la revendication 1, **caractérisé en ce qu'**elle est destinée à être disposée au-delà d'une zone de réception d'un écran dudit terminal de paiement.

5. Terminal de paiement **caractérisé en ce qu'**il comprend :
- une pièce de structure selon l'une de revendications 1 à 4 ; une carte mère,
- le câble électrique formant antenne est un câble monobrin formant trois spires sur le pourtour de ladite pièce de structure
- deux connecteurs métalliques embossés, soudés sur la carte mère dudit terminal de paiement, au sein desquels les deux extrémités dudit câble monobrin sont insérées.

## Patentansprüche

1. Strukturteil einer inneren Architektur eines Zahlungsterminals, wobei das Strukturteil aus einem starren Material besteht, **dadurch gekennzeichnet, dass** das innere Strukturteil, an seinem Umfang, Mittel (I1, I2, 113, I4) zum Greifen und Führen eines elektrischen Kabels, das eine Antenne bildet, umfasst,
**dadurch gekennzeichnet, dass**
die Mittel zum Greifen und Führen die Form eines Kanals aufweisen, wobei die Breite diese Kanals variabel ist.

2. Strukturteil nach Anspruch 1, **dadurch gekennzeichnet, dass** es ferner eine Öffnung (O1) zum Einführen des elektrischen Kabels umfasst.

3. Strukturteil nach Anspruch 1, **dadurch gekennzeichnet, dass** es ferner einen Schacht (G1) für den Auslass des elektrischen Kabels umfasst.

4. Strukturteil nach Anspruch 1, **dadurch gekennzeichnet, dass** es dazu bestimmt ist, jenseits einer Zone für die Aufnahme eines Bildschirms des Zahlungsterminals angeordnet zu werden.

5. Zahlungsterminal **dadurch gekennzeichnet, dass** es Folgendes umfasst:
- ein Strukturteil nach einem der Ansprüche 1 bis 4;
- ein Motherboard, wobei das elektrische Kabel, das eine Antenne bildet, ein einadriges Kabel ist, das am Umfang des Strukturteils drei Windungen bildet,
- zwei aufgeprägte metallische Verbinder, die auf das Motherboard des Zahlungsterminals aufgeschweißt sind und in die die zwei Enden des einadrigen Kabels eingeführt sind.

## Claims

1. Structural part of the internal architecture of a payment terminal, said structural part being made of a rigid material, **characterized in that** said internal structural part comprises, on its periphery, means (I1, I2, I3, I4) for gripping and guiding an electrical cable forming an antenna, **characterized in that** said gripping and guiding means are in the form of a channel, the width of said channel being variable.

2. Structural part according to claim 1, **characterized in that** it further comprises an insertion hole (O1) for said electrical cable.

3. Structural part according to claim 1, **characterized in that** it also comprises an electrical cable outlet duct (G1).

4. Structural part according to claim 1, **characterized in that** it is intended to be disposed beyond a reception zone of a screen of said payment terminal.

5. A payment terminal **characterized in that** it comprises :
- a structural part according to anyone of claims 1 to 4, a motherboard;
- the electrical cable forming an antenna is a single-strand cable forming three turns around the circumference of said structural part;
- two embossed metal connectors, soldered to the motherboard of said payment terminal, into which the two ends of said single-strand cable are inserted.
